(19) **Europäisches Patentamt / European Patent Office / Office européen des brevets**

(11) **EP 3 730 385 B1**

(12) **FASCICULE DE BREVET EUROPEEN**

(45) Date de publication et mention
de la délivrance du brevet:
**02.06.2021 Bulletin 2021/22**

(51) Int Cl.:
***B62D 15/02*** *(2006.01)*    ***B60W 30/06*** *(2006.01)*
***B60W 30/14*** *(2006.01)*

(21) Numéro de dépôt: **20163374.0**

(22) Date de dépôt: **16.03.2020**

(54) **PROCÉDÉ ET DISPOSITIF DE DÉTECTION ET D'ATTÉNUATION DE DÉRIVES DE VITESSE D'UN VÉHICULE AUTOMOBILE INTÉGRÉ DANS UN SYSTÈME D'AIDE AU STATIONNEMENT**

VERFAHREN UND VORRICHTUNG ZUR ERKENNUNG UND MINDERUNG VON GESCHWINDIGKEITSABWEICHUNGEN EINES KRAFTFAHRZEUGS, DIE IN EIN EINPARKHILFSSYSTEM INTEGRIERT IST

METHOD AND DEVICE FOR DETECTING AND REDUCING ANY SPEED DEVIATIONS OF A MOTOR VEHICLE INTEGRATED IN A PARKING ASSISTANCE SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.04.2019 FR 1904455**

(43) Date de publication de la demande:
**28.10.2020 Bulletin 2020/44**

(73) Titulaire: **Renault S.A.S.**
**92100 Boulogne-Billancourt (FR)**

(72) Inventeurs:
- **KOO, Jong-Hoon**
  **92800 Puteaux (FR)**
- **SENE, Pape-Abdoulaye**
  **78000 VERSAILLES (FR)**
- **GUERPILLON, Mathieu**
  **78280 Guyancourt (FR)**

(56) Documents cités:
**CN-A- 107 618 504**    **CN-U- 207 274 660**
**US-A1- 2017 101 089**

EP 3 730 385 B1

**Description**

La présente invention concerne le domaine d'aides à la conduite d'un véhicule automobile, et notamment les aides au stationnement.

Plus particulièrement, l'invention concerne les procédés et systèmes d'aide au stationnement entièrement ou semi automatisés pour la réalisation de manœuvre de stationnement, par exemple de type créneau.

De tels procédés et systèmes d'aide au stationnement permettent la détection d'une place de stationnement puis prennent le contrôle sur la direction assistée électrique du véhicule afin de réaliser la manœuvre de stationnement. L'opération de braquage des roues en vue de la manœuvre de stationnement est ainsi entièrement réalisée de manière automatique.

Le conducteur reste cependant responsable du changement de rapport, de l'accélération et du freinage du véhicule.

On connait du document WO 2014/167255 - A1 (Renault) un procédé de planification de trajectoire pour effectuer une manœuvre de stationnement automatisée d'un véhicule automobile. Toutefois, un tel procédé ne tient pas compte de la vitesse longitudinale du véhicule.

On peut également se référer au document WO 2014/191209 - A1 (Renault) qui décrit un procédé de délégation des manœuvres de stationnement du véhicule à un système automatisé.

Dans de tels procédés, l'accélération, la détection d'obstacles, le freinage et l'immobilisation du véhicule sont sous le contrôle exclusif du conducteur.

Les manœuvres de stationnement deviennent de plus en plus automatisées, notamment l'accélération et le freinage du véhicule. Il devient donc primordial que les procédés et systèmes d'aide au stationnement soient configurés pour anticiper et gérer les opérations habituellement sous la responsabilité du conducteur.

On connait du document FR 3 063 701 - A1 (Renault) un procédé de régulation en boucle fermée de la vitesse et de la position du véhicule depuis une position donnée vers une place de stationnement libre précédemment détectée et proposée au conducteur.

A tout instant, un tel procédé est capable de prendre le contrôle du moteur de la boite de vitesses et du frein afin d'obtenir une vitesse longitudinale du véhicule suivant une valeur cible de consigne de vitesse tout en respectant une distance restante à parcourir en fonction de la vitesse effective du véhicule.

Lorsque la distance restante à parcourir devient nulle, le véhicule doit avoir une vitesse proche de zéro. La vitesse du véhicule étant asservie à la valeur cible de consigne de vitesse, ladite valeur cible doit également être proche de zéro.

Le document FR 3 063 701 - A1 (Renault) propose ainsi une régulation en boucle ouverte configurée pour activer le système de freinage lorsque la distance restante à parcourir est proche de zéro.

Toutefois, un tel procédé ne prend pas en compte l'environnement autour du véhicule, l'aspérité de la route ou encore les obstacles bas et franchissables et l'imprécision des actionneurs et des capteurs embarqués ne permettent pas d'atteindre une précision d'arrêt du véhicule.

Le document CN207274660 décrit un dispositif de contrôle de vitesse de rampe appliqué au stationnement entièrement automatique qui comprend un module de calcul d'une erreur de vitesse à un instant donné en fonction d'une valeur de consigne de vitesse et d'une valeur mesurée ou estimée de la vitesse du véhicule.

Toutefois le dispositif divulgué dans le document CN207274660 ne garantit notamment pas un bon suivi de la consigne de vitesse et le respect de la distance restante à parcourir pour finaliser l'opération de stationnement, ce qui nuit au confort de la manœuvre.

Une des difficultés techniques de la régulation de vitesse d'un véhicule dans le cadre d'une manœuvre de stationnement automatisée réside dans le fait qu'un moteur thermique présente un temps de réponse relativement important allant par exemple jusqu'à 4 secondes, ainsi qu'une imprécision dans la valeur de couple appliquée en réponse à une consigne de couple.

Durant la manœuvre de stationnement, il est fréquent de rencontrer une perturbation extérieure, comme un changement de pente, un obstacle bas ou encore un freinage brusque du conducteur. Une telle perturbation fait chuter la vitesse du véhicule à des valeurs inférieures à la consigne de vitesse émise, ce qui peut, dans certains cas, entrainer un arrêt complet du véhicule. Cette chute de vitesse ponctuelle peut entrainer en suivant un emballement de la vitesse du véhicule.

Il existe un besoin d'améliorer les procédés et systèmes d'aide à la conduite afin de proposer au conducteur une aide au stationnement la plus sécurisée et confortable possible.

L'objet de la présente invention est donc de fournir un système et un procédé d'aide au stationnement capables de prévenir l'emballement de la vitesse du véhicule en cas de baisse de vitesse due à une perturbation extérieure au véhicule.

Un autre objet de l'invention est de réduire le temps de réponse du moteur thermique.

L'invention a pour objet un dispositif de détection et d'atténuation des dérives de vitesse d'un véhicule automobile, ou de manière générale à tout automate mobile, par exemple à la suite d'un passage sur un obstacle franchissable non détecté, pouvant entrainer l'emballement du moteur thermique lors de la manœuvre de stationnement, comprenant :

un module de calcul d'une erreur de vitesse à un instant en fonction d'une valeur de consigne de vitesse à un instant précédent et d'une valeur mesurée de la vitesse du véhicule,
un module de comparaison de ladite erreur de vitesse avec une valeur de seuil,
un module de calcul d'un point minimum local de la courbe de la vitesse mesurée ou estimée du véhicule.

Ce point minimum local est défini comme étant le point où la pente de la courbe de vitesse mesurée ou estimée change de signe. En d'autres termes, il s'agit du point où la dérivée de la vitesse mesurée ou estimée s'annule en changeant de signe.

Le dispositif comprend en outre un module de détection du minimum local, et un module de calcul d'une consigne de vitesse de reprise, ledit module étant activé lorsque le minimum local est détecté.

Ainsi, grâce audit dispositif on gère tous les cas entrainant une dérive de la vitesse mesurée ou estimée du véhicule par rapport à la consigne de vitesse.

Par exemple, le module de calcul d'un point minimum local est activé lorsque l'erreur de vitesse est supérieure à la valeur de seuil.

Avantageusement, pour calculer le point minimum local, ledit module est configuré pour calculer la dérivée filtrée de la vitesse du véhicule à l'instant t et sur un échantillon retardé de N périodes d'échantillon.

Le point minimum local est, par exemple, détecté si le signe de la dérivée filtrée à l'instant t est positif et si le signe de la dérivée filtrée pour l'échantillon retardé de N périodes est négatif.

La consigne de vitesse de reprise peut être calculée en fonction de la vitesse du véhicule à l'instant du calcul et un seuil de vitesse.

Ledit seuil étant choisi pour éviter des valeurs trop basses de réinitialisation de vitesse.

Avantageusement, le module de calcul est configuré pour émettre un signal de réinitialisation au module de calcul d'une valeur de consigne de vitesse du véhicule afin d'activer la réinitialisation de la consigne de vitesse à la vitesse ainsi déterminée.

Selon un second aspect, l'invention concerne un système d'aide au stationnement d'un véhicule automobile permettant le stationnement du véhicule depuis une voie de circulation vers un emplacement libre de stationnement et la sortie de ladite place de stationnement vers la voie de circulation, ledit véhicule automobile comprenant un système de détection d'obstacles, un système de détection de places de stationnement, une direction assistée électrique pilotable en angle de braquage, un moteur et un système de freinage pilotables en couple, une boite de vitesse automatique ou un système dit «shift by wire », au moins un capteur odométrique, un accéléromètre, et un moyen d'activation d'une fonction de pilotage automatique, le système d'aide au stationnement comprenant :

- un module de détection de l'activation d'une phase de recherche d'une place de stationnement apte à vérifier que le conducteur a appuyé sur un organe de commande afin d'activer la fonction de recherche de place de stationnement, cette recherche de place peut également être activée sans action du conducteur dès lors que la vitesse du véhicule est en dessous d'un certain seuil par exemple
- un module de vérification des conditions pour démarrer la manœuvre de stationnement,
- un module de vérification de l'enfoncement de la pédale (P) d'accélération et module de réalisation de la manœuvre de stationnement qui met le véhicule en mouvement et régule la vitesse par un module de régulation de vitesse, et
- un dispositif de détection et d'atténuation des dérives de vitesse d'un véhicule automobile tel que décrit précédemment.

Avantageusement, le dispositif de détection et d'atténuation des dérives de vitesse comprend un module de vérification de l'état du module de régulation de vitesse permettant de s'assurer que le véhicule est bien en mouvement semi-automatisé ou automatisé.

Le système comprend, par exemple, quatre états de fonctionnement, un état initial (E0) correspondant à la phase de recherche d'une place de stationnement par le système de détection de places de stationnement, un premier état (E1) correspondant à une phase d'attente du début de la manœuvre, un deuxième état (E2) correspondant à une phase d'annulation du freinage pour la mise en mouvement du véhicule, un troisième état (E3) de mise en mouvement et un quatrième état (E4) correspondant à la phase d'activation du freinage.

Selon un troisième aspect, l'invention concerne un procédé de détection et d'atténuation des dérives de vitesse d'un véhicule automobile, par exemple à la suite d'une passage sur un obstacle bas franchissable non détectée pouvant entrainer l'emballement du moteur thermique lors de la manœuvre de stationnement, dans lequel :

on calcule une erreur de vitesse à un instant en fonction d'une valeur de consigne de vitesse à un instant précédent et d'une valeur mesurée de la vitesse du véhicule,
on compare ladite erreur de vitesse avec une valeur de seuil,
on calcule un point minimum local de la courbe de la vitesse du véhicule lorsque ladite erreur de vitesse est supérieure à la valeur de seuil.

Ce point minimum local peut être défini comme étant le point où la pente de la courbe de vitesse change de signe. En d'autres termes, il s'agit du point où la dérivée de la vitesse s'annule en changeant de signe.

Dans le procédé, on détecte le point minimum local, et on calcule une consigne de vitesse de reprise lorsque le point minimum local est détecté.

Avantageusement, lors du calcul d'un point minimum local, on calcule la dérivée filtrée de la vitesse du véhicule à l'instant et sur un échantillon retardé de N périodes d'échantillon, le point minimum local étant détecté si le signe de la dérivée filtrée à l'instant est positif et si le signe de la dérivée filtrée pour l'échantillon retardé de N périodes est négatif. La valeur de N est liée à la mesure de la vitesse et au pas d'échantillonnage. Par exemple, avec un pas de temps de 20ms et N égal à 8, on obtient un temps de 160ms.

Par exemple, la consigne de vitesse de reprise est calculée en fonction de la vitesse du véhicule à l'instant du calcul et un seuil de vitesse, par exemple choisi pour éviter des valeurs trop basses de réinitialisation de vitesse. Le seuil est par exemple de 1km/h.

On peut émettre un signal de réinitialisation au module de calcul d'une valeur de consigne de vitesse du véhicule afin d'activer la réinitialisation de la consigne de vitesse à la vitesse ainsi déterminée.

D'autres buts, caractéristiques et avantages de l'invention apparaîtront à la lecture de la description suivante, donnée uniquement à titre d'exemple non limitatif, et faite en référence aux dessins annexés sur lesquels :

La figure 1 représente schématiquement un système d'aide au stationnement d'un véhicule automobile selon l'invention ;
La figure 2 illustre en détails le module de régulation de vitesse du système d'aide au stationnement de la figure 1 ;
La figure 3 illustre les états du système d'aide au stationnement selon la figure 1 ;
La figure 4 représente trois courbes illustrant le comportement du véhicule en cas d'obstacle survenant durant une manœuvre de stationnement dans un procédé de l'état de la technique ;
La figure 5 illustre en détails le dispositif de détection et d'atténuation des dérives de vitesse du système d'aide au stationnement de la figure 1 ;
La figure 6 représente trois courbes illustrant le comportement du véhicule en cas d'obstacle franchissable et non détecté par les capteurs survenant durant une manœuvre de stationnement lors des états du système d'aide au stationnement de la figure 1 ; et
La figure 7 illustre les étapes d'un procédé de détection et d'atténuation des dérives de vitesse selon l'invention mis en œuvre par le dispositif de détection et d'atténuation des dérives du système d'aide au stationnement de la figure 1.

Par obstacle, on entend également les changements de pente, la présence d'un nid de poule, etc...

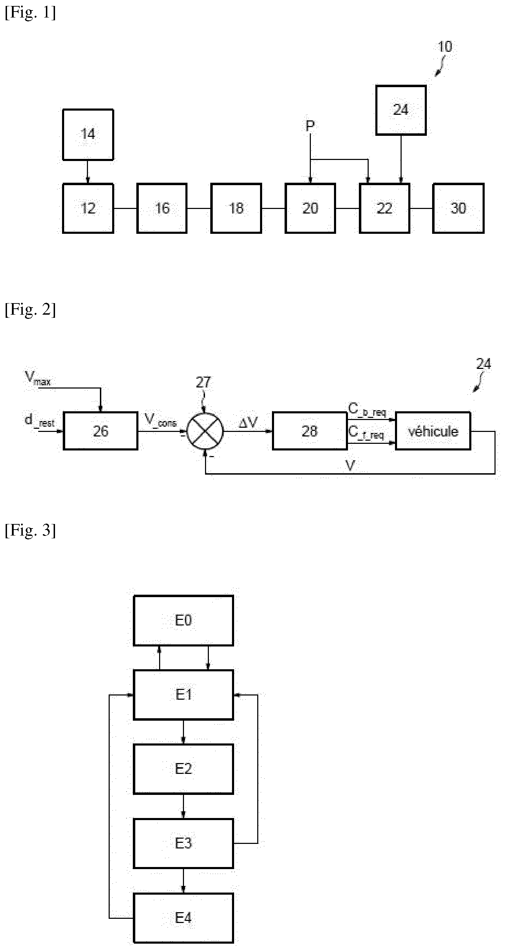

Sur la figure 1, on a représenté de manière très schématique un système 10 d'aide à la conduite et notamment au stationnement d'un véhicule automobile (non représenté). Le véhicule automobile comprend les éléments suivants qui ne sont pas représentés sur les figures pour plus de clarté : un système de détection d'obstacles situés à proximité du véhicule, par exemple à une distance inférieure à 2m, un système de détection de places de stationnement, une direction assistée électrique pilotable en angle de braquage, un moteur et un système de freinage tous les deux pilotables en couple répondant à des demandes d'accélération et de freinage, une boite de vitesse automatique ou un système dit «shift by wire », au moins un capteur odométrique, un accéléromètre, une interface visuelle et sonore, un moyen d'activation d'une fonction pilotage automatique ou « homme-mort », et une pédale d'accélération, ainsi qu'un capteur d'enfoncement de ladite pédale d'accélération.

Le système 10 d'aide au stationnement permet le stationnement du véhicule depuis une voie de circulation vers un emplacement libre de stationnement. Le système 10 d'aide au stationnement permet de commander le moteur, les freins, la direction, ainsi que la boite de vitesse automatique.

Le système 10 d'aide au stationnement comprend un module 12 de détection de l'activation d'une phase de recherche d'une place de stationnement. Le module 12 de détection vérifie que le conducteur a appuyé sur un organe de commande 14, par exemple un bouton présent sur le tableau de bord du véhicule afin d'activer la fonction de recherche de place de stationnement. Lorsque le conducteur active la fonction de recherche de place de stationnement, le module 12 de détection détecte une ou plusieurs places de stationnement à proximité du véhicule et les affiche, par exemple sur une interface homme-machine (non représentée). Lors de cette phase de recherche, le système 10 d'aide au stationnement est à l'état E0, non actif, c'est-à-dire qu'aucun pilotage n'est réalisé sur les actionneurs. Le conducteur du véhicule reste entièrement responsable de son véhicule.

On pourrait également prévoir que le module 12 détecte des places de stationnement sans les proposer au conducteur avant que le conducteur n'appuie sur le bouton de commande 14 afin de pouvoir proposer au conducteur les places détectées dès qu'il appuie sur l'organe de commande 14.

L'interface homme-machine (non représentée) du véhicule invite ensuite le conducteur à avancer jusqu'à la détection d'une place de stationnement puis à enclencher la marche arrière.

Le système 10 d'aide au stationnement comprend un module 16 de vérification des conditions pour démarrer la manœuvre de stationnement. Une fois la place de stationnement validée par le conducteur, et lorsque les conditions nécessaires pour engager la manœuvre sont réunies, c'est-à-dire, qu'une place de stationnement est trouvée, que le véhicule est dans la bonne position pour effectuer la manœuvre de stationnement, que le véhicule est à l'arrêt et que les feux clignotants sont actionnés, le système d'aide au stationnement est prêt pour engager la manœuvre de stationnement et passe à un état E1, correspondant à une phase d'attente du début de la manœuvre. Le conducteur doit alors confirmer la manœuvre par, par exemple, un appui sur le même organe de commande 14 que la détection de place, ou un autre organe de commande.

Le système 10 peut comprendre en outre un module 18 de découplage entre le moteur et la pédale d'accélération, de sorte qu'une fois la manœuvre de stationnement validée, et pendant toute la durée de la manœuvre de stationnement, le moteur ne prend plus en compte les consignes d'accélération transmises par la pédale d'accélération, mais uniquement les consignes d'accélération envoyées par un module 24 de régulation de vitesse du système 10 d'aide au stationnement.

Pour débuter la manœuvre de stationnement, le système 10 comprend un module 20 de vérification de l'enfoncement de la pédale P d'accélération. Ainsi, la manœuvre de stationnement ne démarre que si le conducteur appuie sur la pédale P d'accélération et maintient cet appui. La pédale d'accélération P a le rôle d'un moyen de commande « homme-mort ».

Dans une autre réalisation, le module 20 de vérification de l'enfoncement de la pédale d'accélération n'inclus pas la condition d'appui continue sur la pédale d'accélération pour lancer la régulation et la mise en mouvement du véhicule selon un principe homme-mort. L'enfoncement initiale de la pédale d'accélération permet d'acquitter le début du mouvement.

En cas de stationnement par créneau, le conducteur doit engager la marche arrière. Lorsque la marche arrière est engagée et que le conducteur transmet l'ordre de démarrer la manœuvre de stationnement au système d'aide au stationnement, celui-ci passe à l'état E2, correspondant à une phase d'annulation de l'accélération.

Le système 10 comprend à cet effet un module 22 de réalisation de la manœuvre de stationnement qui met le véhicule en mouvement lors de l'état E2 et régule la vitesse par un module 24 de régulation de vitesse lors d'un état E3.

Le module 24 de régulation de vitesse, illustré en détails sur la figure 3, comprend un module 26 de calcul d'une valeur de consigne de vitesse du véhicule V cons en fonction de la vitesse maximale V_max du véhicule à ne pas dépasser et la distance restante d_rest à parcourir. Ces informations proviennent du système de détection des places de parking et des obstacles autour du véhicule. Le module 24 de régulation de vitesse comprend en outre un comparateur 27 configuré pour déterminer un écart $\Delta V$ entre ladite valeur de consigne de vitesse du véhicule V_cons et la vitesse réelle V du véhicule. Cet écart $\Delta V$ est ensuite transmis à un module 28 de calcul des requêtes de couple C_b_req et C_f_req respectivement pour le système moteur/boîte de vitesse et pour le système de freinage.

A la fin du mouvement de la manœuvre de stationnement, et sans interruptions de l'état E3, le système d'aide au stationnement passe à l'état E4 correspondant à la phase d'activation du freinage.

Une fois le véhicule à l'arrêt, le système 10 d'aide au stationnement passe à l'état E1 qui correspond à la phase d'attente du prochain mouvement.

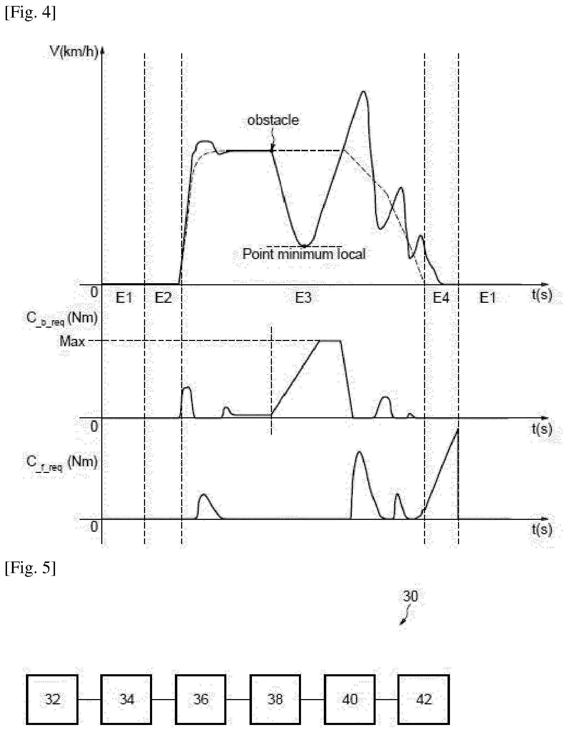

Dans les systèmes et procédés de l'état de la technique, les trois courbes respectivement de vitesse V, de couple transmis au système moteur/boîte de vitesse C_b_req et de couple transmis au système de freinage C_f_req représentant le comportement du véhicule en cas d'obstacle survenant durant une manœuvre de stationnement est illustré sur la figure 4.

Sur ces courbes, on constate lors du franchissement d'un obstacle non détecté, une réduction importante de la vitesse du véhicule. De fait de la régulation de vitesse en boucle fermée, l'erreur de vitesse devient positive. Plus cette erreur de vitesse augmente, plus la requête envoyée au moteur et à la boite de vitesse augmente jusqu'à atteindre une valeur de saturation maximale Max implémentée dans le régulateur 22. Le temps de réponse du moteur étant importante, la vitesse du véhicule continue à décroitre jusqu'à atteindre le point d'inversion de la courbe de vitesse appelée point minimum local.

Toutefois, le groupe motopropulseur a déjà commencé à appliquer une requête de couple provenant du régulateur. On obtient alors une suraccélération du véhicule et ainsi un dépassement de la vitesse du véhicule par rapport à la consigne de vitesse V_cons.

Une requête de freinage brusque du véhicule est ensuite transmise au système de freinage et est d'autant plus importante que la vitesse du véhicule à l'état E4 n'est pas nulle.

Le confort de la régulation se trouve fortement dégradé.

De plus, le risque de collision avec les objets environnant du véhicule se trouve également augmenté du fait que la distante restante à parcourir se trouve fortement réduite.

Pour éviter cela, lors de l'état E3 de régulation de vitesse, le système 10 est configuré pour détecter et atténuer toute dérive de vitesse du véhicule automobile, par exemple à la suite d'un franchissement d'un obstacle bas non détecté par le système de perception, pouvant entrainer l'emballement du moteur thermique lors de la manœuvre de stationnement.

Le système 10 comprend à cet effet un dispositif 30 de détection et d'atténuation de toute dérive de vitesse du véhicule automobile.

Le dispositif 30 de détection et d'atténuation de toute dérive de vitesse comprend un module 32 de vérification de l'état du module 24 de régulation de vitesse permettant de s'assurer que le véhicule est bien à l'état E3 en mouvement semi-automatisé ou automatisé.

Le dispositif 30 comprend en outre un module 34 de calcul de l'erreur de vitesse ΔV(k) à l'instant k selon l'équation suivante :

$$[\text{Math } 1]$$
$$\Delta V(k) = V_{\_cons(k-1)} - V(k)$$

Avec :

k, l'instant actuelle d'évaluation ;
V_cons(k-1), la consigne de vitesse à l'instant k-1, exprimée en m/s ; et
V(k), la valeur mesurée de la vitesse du véhicule à l'instant k, exprimée en m/s.

L'erreur de vitesse ΔV(k) ou la dérive est évaluée en soustrayant la vitesse courante du véhicule V(k) à la valeur précédente de la consigne de vitesse V_cons (k-1) transmise au régulateur.

Le dispositif 30 comprend un module 36 de comparaison de ladite erreur de vitesse ΔV(k) avec une valeur de seuil S afin de déterminer si la dérive nécessite de recalculer une nouvelle consigne de vitesse ou non.

Le seuil S de vitesse est choisi afin d'éviter un recalcul non nécessaire lorsque la chute de vitesse est sans impact sur la régulation de vitesse.

Le seuil S de vitesse est positif afin de ne gérer que les cas de sous-vitesse, une valeur possible de ce seuil est par exemple de 1km/h, soit 0.3 m/s.

Le dispositif 30 comprend un module 38 de calcul d'un point minimum local de la courbe de la vitesse du véhicule. Ce point minimum local est défini comme étant le point où la pente de la courbe de vitesse change de signe. En d'autres termes, il s'agit du point où la dérivée de la vitesse s'annule en changeant de signe.

Le module 38 de calcul d'un point minimum local est activé lorsque l'erreur de vitesse ΔV(k) est supérieure à la valeur de seuil S.

Pour calculer le point minimum local, le module 38 est configuré pour calculer la dérivée filtrée de la vitesse du véhicule P(k) au moment k et sur un échantillon retardé de N périodes d'échantillon.

La dérivée filtrée, de manière non limitative avec un filtre passe-bas d'ordre un, de la vitesse du véhicule P(k) à l'instant k s'écrit selon l'équation suivante :

$$[\text{Math } 2]$$
$$P(k) = \frac{Te}{2Td + Te}[V(k) - P(k-1)] + \frac{Te}{2Td + Te}[V(k-1) + \frac{2Td}{Te}P(k-1)]$$

Avec :

V, la vitesse du véhicule, exprimée en m/s ;
Te, la période d'échantillonnage du régulateur, exprimée en s ;
Td, la constante de temps de la dérivée filtrée, exprimée en s, représente le temps de réponse du filtre.

La dérivée filtrée, de manière non limitative avec un filtre passe-bas d'ordre un, de la vitesse du véhicule P(k-N) pour l'échantillon retardé de N périodes s'écrit selon l'équation suivante :

[Math 3]

$$P(k - N) = \frac{Te}{2Td + Te}[V(k - N) - P(k - 1 - N)] + \frac{Te}{2Td + Te}[V(k - 1 - N) + \frac{2Td}{Te}P(k - 1 - N)]$$

Dans un mode préférentiel, Te vaut par exemple 0.02s, Td est prédéterminé de manière à être un multiple de la période d'échantillonnage et de manière à filtrer les perturbations de la vitesse (Td pas trop faible) et ne doit pas être trop grand pour éviter de lisser le minimum local, Td valant par exemple 0.08s puis on détermine la valeur du nombre d'échantillons retardés N pour avoir une fenêtre glissante assez grande pour encadrer le minimum local tout en filtrant les faibles oscillations qu'on peut avoir sur la vitesse (N pas trop petit). Préférentiellement N est calculé par la formule N= 2*Td/Te, ce qui donne avec les valeurs précédentes de l'exemple N=8 permettant de filtrer les fréquences supérieures à 6.2Hz de fait si les ondulations sont plus rapides, on considère que ce n'est pas un minimum local. Ainsi, avec N = 8 la durée de la fenêtre vaut 0.16 s (N*Te). Ce choix permet d'avoir au moins deux fois la dynamique de la dérivée filtrée mais n'est pas limitatif en effet, une valeur supérieure à 2 pourrait notamment être utilisée.

Plus le signal mesuré ou estimé de vitesse est bruité, plus il faut une fenêtre large ce qui se traduira par N élevé, et par ailleurs N étant positif il existe une limite basse non filtrable.

Le dispositif 30 comprend un module 40 de détection du minimum local. Le minimum local est détecté si le signe de la dérivée filtrée P(k) à l'instant k est positif et si le signe de la dérivée filtrée P(k-N) pour l'échantillon retardé de N périodes est négatif :

[Math 4]

$$sign\big(P(k)\big) > 0 \; ET$$

[Math 5]

$$sign(P(k - N) < 0$$

Lorsque le minimum local est détecté, un module 42 de calcul d'une consigne de vitesse de reprise V_reset_cons est activé.

La consigne de vitesse de reprise V_reset_cons est calculée de sorte à être suffisamment élevée pour la reprise du mouvement selon l'équation suivante :

[Math 6]

$$V\_reset\_cons(k) = Max\left(V\_reset(k); V\_reset\_Min\right)$$

Avec :

V_reset, la vitesse du véhicule à l'instant du calcul ; et
V_reset_Min, un seuil de vitesse choisi pour éviter des valeurs trop basses de réinitialisation de vitesse, par exemple 0.3m/s.

Le module 42 de calcul est configuré pour émettre un signal de réinitialisation au module 26 de calcul d'une valeur de consigne de vitesse du véhicule V cons afin d'activer la réinitialisation de la consigne de vitesse à la vitesse ainsi déterminée V_reset_cons.

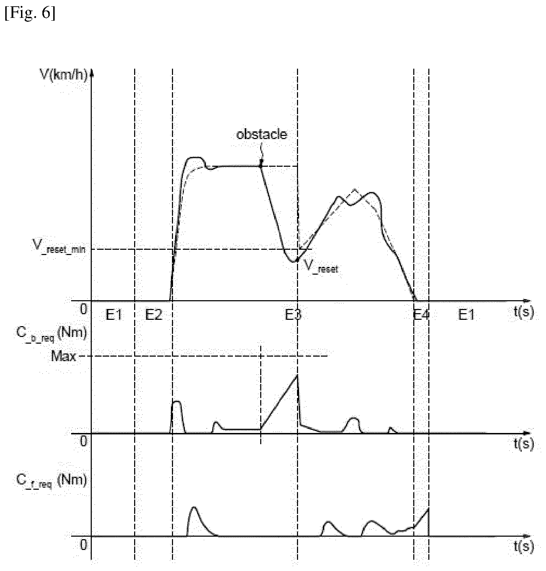

La figure 6 illustre les trois courbes respectivement de vitesse V, de couple transmis à la boite de vitesse C_b_req et de couple transmis au système de freinage C_f_req représentant le comportement du véhicule en cas d'obstacle survenant durant une manœuvre de stationnement en utilisant le dispositif 30.

Grace au recalcul de la consigne de vitesse suite à la détection d'une dérive de vitesse et du point minimum local, il est possible d'empêcher la saturation de la consigne de couple envoyée au système moteur/boite de vitesse, tout en assurant le bon suivi de la consigne de vitesse et le respect de la distance restante à parcourir. Le confort de la manœuvre de stationnement est également assuré.

On peut émettre comme hypothèse que la valeur de vitesse de réinitialisation V_reset_cons (k) est égale au seuil de vitesse V_reset_Min.

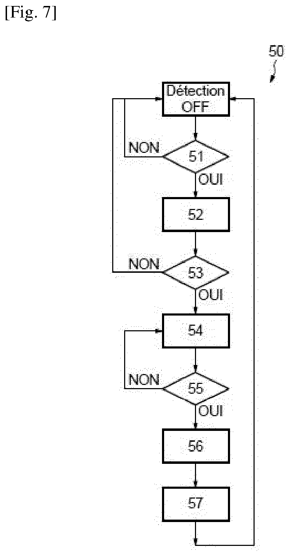

La figure 7 représente un organigramme de mise en œuvre d'un procédé 50 de détection et d'atténuation de toute dérive de vitesse du véhicule automobile selon l'invention mis en œuvre par le système d'aide au stationnement de la figure 1. Le procédé de détection et d'atténuation de toute dérive de vitesse est mis en œuvre lors de l'état E3 par le dispositif 30.

Le procédé 50 comprend une étape 51 de vérification de l'état du module 24 de régulation de vitesse permettant de s'assurer que le véhicule est bien à l'état E3 en mouvement semi-automatisé ou automatisé.

Le procédé 50 comprend une étape 52 de calcul de l'erreur de vitesse ΔV(k) à l'instant k selon l'équation suivante :

[Math 1]

$$\Delta V(k) = V_{\_cons(k-1)} - V(k)$$

Avec :

k, l'instant actuelle d'évaluation ;
V_cons(k-1), la consigne de vitesse à l'instant k-1, exprimée en m/s ; et
V(k), la valeur mesurée de la vitesse du véhicule à l'instant k, exprimée en m/s.

L'erreur de vitesse ΔV(k) ou la dérive est évaluée en soustrayant la vitesse courante du véhicule V(k) à la valeur précédente de la consigne de vitesse V_cons (k-1) transmise au régulateur.

Le procédé 50 comprend en outre une étape 53 de comparaison de ladite erreur de vitesse ΔV(k) avec une valeur de seuil S pouvant être par exemple fixé à 0.3 m/s afin de déterminer si la dérive nécessite de recalculer une nouvelle consigne de vitesse ou non.

Le seuil S de vitesse est choisi afin d'éviter un recalcul non nécessaire lorsque la chute de vitesse est sans impact sur la régulation de vitesse.

Le seuil S de vitesse est positif afin de ne gérer que les cas de sous-vitesse.

Le procédé 50 comprend en outre une étape 54 de calcul d'un point minimum local de la courbe de la vitesse mesurée ou estimée du véhicule. Ce point minimum local est défini comme étant le point où la pente de la courbe de vitesse change de signe. En d'autres termes, il s'agit du point où la dérivée de la vitesse s'annule en changeant de signe.

L'étape de calcul d'un point minimum local est activé lorsque l'erreur de vitesse ΔV(k) est supérieure à la valeur de seuil S.

Pour calculer le point minimum local, on calcule la dérivée filtrée de la vitesse du véhicule P(k) au moment k et sur un échantillon retardé de N périodes d'échantillon.

La dérivée filtrée de la vitesse du véhicule P(k) à l'instant k s'écrit selon l'équation suivante :

[Math 2]

$$P(k) = \frac{Te}{2Td + Te}[V(k) - P(k-1)] + \frac{Te}{2Td + Te}[V(k-1) + \frac{2Td}{Te}P(k-1)]$$

Avec :

V, la vitesse du véhicule, exprimée en m/s ;
Te, la période d'échantillonnage du régulateur, exprimée en s ;
Td, la constante de temps de la dérivée filtrée, exprimée en s.

La dérivée filtrée de la vitesse du véhicule P(k-N) pour l'échantillon retardé de N périodes s'écrit selon l'équation suivante :

[Math 3]

$$P(k-N) = \frac{Te}{2Td + Te}[V(k-N) - P(k-1-N)] + \frac{Te}{2Td + Te}[V(k-1-N) + \frac{2Td}{Te}P(k-1-N)]$$

Le procédé 50 comprend en outre une étape 55 de détection du minimum local. Le minimum local est détecté si le signe de la dérivée filtrée P(k) à l'instant k est positif et si le signe de la dérivée filtrée P(k-N) pour l'échantillon retardé de N périodes est négatif :

$$[\text{Math } 4]$$

$$sign\big(P(k)\big) > 0 \; ET$$

$$[\text{Math } 5]$$

$$sign(P(k - N) < 0$$

Lorsque le minimum local est détecté, on calcule, à l'étape 56, une consigne de vitesse de reprise V_reset_cons.

La consigne de vitesse de reprise V_reset_cons est calculée de sorte à être suffisamment élevée pour la reprise du mouvement selon l'équation suivante :

$$[\text{Math } 6]$$

$$V\_reset\_cons(k) \; = Max\,(V\_reset(k); V\_reset\_Min)$$

Avec :

V_reset, la vitesse du véhicule à l'instant du calcul ; et
V_reset_Min, un seuil de vitesse choisi pour éviter des valeurs trop basses de réinitialisation de vitesse.

Simultanément au calcul de la consigne de vitesse de reprise V_reset_cons, un signal de réinitialisation au module 26 de calcul d'une valeur de consigne de vitesse du véhicule V_cons afin d'activer la réinitialisation de la consigne de vitesse à la vitesse ainsi déterminée V_reset_cons.

Grace à l'invention, on peut gérer tous les cas entrainant une dérive de la vitesse mesurée ou estimée du véhicule par rapport à la consigne de vitesse voulue, lié à des perturbations extérieures au véhicule.

## Revendications

1. Dispositif (30) de détection et d'atténuation des dérives de vitesse d'un véhicule automobile, comprenant :

   un module (34) de calcul d'une erreur de vitesse (ΔV(k)) à un instant (k) en fonction d'une valeur de consigne de vitesse (V_cons(k-1)) à un instant précédent (k-1) et d'une valeur mesurée ou estimée de la vitesse du véhicule (V(k)),
   un module (36) de comparaison de ladite erreur de vitesse (ΔV(k)) avec une valeur de seuil (S),
   un module (38) de calcul d'un point minimum local de la courbe de la vitesse du véhicule,
   un module (40) de détection du minimum local, et
   un module (42) de calcul d'une consigne de vitesse de reprise (V_reset_cons), ledit module (42) étant activé lorsque le minimum local est détecté.

2. Dispositif (30) selon la revendication 1, dans lequel le module (38) de calcul d'un point minimum local est activé lorsque l'erreur de vitesse (ΔV(k)) est supérieure à la valeur de seuil (S).

3. Dispositif (30) selon la revendication 2, dans lequel pour calculer le point minimum local, ledit module (38) est configuré pour calculer la dérivée filtrée de la vitesse du véhicule (P(k)) à l'instant (k) et sur un échantillon retardé de N périodes d'échantillon.

4. Dispositif (30) selon la revendication 3, dans lequel le point minimum local est détecté si le signe de la dérivée filtrée (P(k)) à l'instant (k) est positif et si le signe de la dérivée filtrée (P(k-N)) pour l'échantillon retardé de N périodes est négatif.

5. Dispositif (30) selon l'une quelconque des revendications précédentes, dans lequel la consigne de vitesse de reprise (V_reset_cons) est calculée en fonction de la vitesse du véhicule à l'instant du calcul (V_reset) et un seuil de vitesse (V_reset_Min).

**6.** Dispositif (30) selon la revendication 5, dans lequel le module (42) de calcul est configuré pour émettre un signal de réinitialisation au module (26) de calcul d'une valeur de consigne de vitesse du véhicule (V_cons) afin d'activer la réinitialisation de la consigne de vitesse à la vitesse ainsi déterminée (V_reset_cons).

**7.** Système d'aide au stationnement d'un véhicule automobile permettant le stationnement du véhicule depuis une voie de circulation vers un emplacement libre de stationnement et la sortie de ladite place de stationnement vers la voie de circulation, ledit véhicule automobile comprenant un système de détection d'obstacles, un système de détection de places de stationnement, une direction assistée électrique pilotable en angle de braquage, un moteur et un système de freinage pilotables en couple, une boite de vitesse automatique ou un système dit «shift by wire », au moins un capteur odométrique, un accéléromètre, et un moyen d'activation d'une fonction de pilotage automatique, le système d'aide au stationnement comprenant :

- un module (12) de détection de l'activation d'une phase de recherche d'une place de stationnement apte à vérifier que le conducteur a appuyé sur un organe de commande (14) afin d'activer la fonction de recherche de place de stationnement,
- un module (16) de vérification des conditions pour démarrer la manœuvre de stationnement,
- un module (20) de vérification de l'enfoncement de la pédale (P) d'accélération et module (22) de réalisation de la manœuvre de stationnement qui met le véhicule en mouvement et régule la vitesse par un module (24) de régulation de vitesse, et
- un dispositif (30) de détection et d'atténuation des dérives de vitesse d'un véhicule automobile selon l'une quelconque des revendications 1 à 6.

**8.** Système (10) d'aide au stationnement selon la revendication 7, dans lequel le dispositif (30) de détection et d'atténuation des dérives de vitesse comprend un module (32) de vérification de l'état du module (24) de régulation de vitesse permettant de s'assurer que le véhicule est bien en mouvement semi-automatisé ou automatisé.

**9.** Procédé (50) de détection et d'atténuation des dérives de vitesse d'un véhicule automobile, dans lequel :

on calcule une erreur de vitesse ($\Delta V(k)$) à un instant (k) en fonction d'une valeur de consigne de vitesse (V_cons(k-1)) à un instant précédent (k-1) et d'une valeur mesurée ou estimée de la vitesse du véhicule (V(k)),
on compare ladite erreur de vitesse ($\Delta V(k)$) avec une valeur de seuil (S),
on calcule un point minimum local de la courbe de la vitesse du véhicule lorsque ladite erreur de vitesse ($\Delta V(k)$) est supérieure à la valeur de seuil (S),
on détecte le point minimum local, et
on calcule une consigne de vitesse de reprise (V_reset_cons) lorsque le point minimum local est détecté.

**10.** Procédé selon la revendication 9, dans lequel lors du calcul d'un point minimum local, on calcule la dérivée filtrée de la vitesse du véhicule (P(k)) à l'instant (k) et sur un échantillon retardé de N périodes d'échantillon, le point minimum local étant détecté si le signe de la dérivée filtrée (P(k)) à l'instant (k) est positif et si le signe de la dérivée filtrée (P(k-N)) pour l'échantillon retardé de N périodes est négatif.

**11.** Procédé selon la revendication 9 ou 10, dans lequel la consigne de vitesse de reprise (V_reset_cons) est calculée en fonction de la vitesse du véhicule à l'instant du calcul (V_reset) et un seuil de vitesse (V_reset_Min).

**12.** Procédé selon la revendication 11, dans lequel on émet un signal de réinitialisation au module (26) de calcul d'une valeur de consigne de vitesse du véhicule (V_cons) afin d'activer la réinitialisation de la consigne de vitesse à la vitesse ainsi déterminée (V_reset_cons).

**Patentansprüche**

**1.** Vorrichtung (30) zur Erkennung und Minderung von Geschwindigkeitsabweichungen eines Kraftfahrzeugs, welche umfasst:

ein Modul (34) zur Berechnung eines Geschwindigkeitsfehlers ($\Delta V(k)$) zu einem Zeitpunkt (k) in Abhängigkeit von einem Geschwindigkeitssollwert (V_cons(k-1)) zu einem vorhergehenden Zeitpunkt (k-1) und einem gemessenen oder geschätzten Wert der Geschwindigkeit des Fahrzeugs (V(k)),
ein Modul (36) zum Vergleich des Geschwindigkeitsfehlers ($\Delta V(k)$) mit einem Schwellenwert (S),

ein Modul (38) zur Berechnung eines lokalen Minimumpunktes der Kurve der Geschwindigkeit des Fahrzeugs, ein Modul (40) zur Erkennung des lokalen Minimums und ein Modul (42) zur Berechnung eines Fortsetzungsgeschwindigkeits-Sollwertes (V_reset_cons), wobei das Modul (42) aktiviert wird, wenn das lokale Minimum erkannt wird.

2. Vorrichtung (30) nach Anspruch 1, wobei das Modul (38) zur Berechnung eines lokalen Minimumpunktes aktiviert wird, wenn der Geschwindigkeitsfehler ($\Delta V(k)$) größer als der Schwellenwert (S) ist.

3. Vorrichtung (30) nach Anspruch 2, wobei zum Berechnen des lokalen Minimumpunktes das Modul (38) dafür ausgelegt ist, die gefilterte Ableitung der Geschwindigkeit des Fahrzeugs (P(k)) zum Zeitpunkt (k) und an einer um N Probenahmeperioden verzögerten Probe zu berechnen.

4. Vorrichtung (30) nach Anspruch 3, wobei der lokale Minimumpunkt erkannt wird, falls das Vorzeichen der gefilterten Ableitung (P(k)) zum Zeitpunkt (k) positiv ist und falls das Vorzeichen der gefilterten Ableitung (P(k-N)) für die um N Perioden verzögerte Probe negativ ist.

5. Vorrichtung (30) nach einem der vorhergehenden Ansprüche, wobei der Fortsetzungsgeschwindigkeits-Sollwert (V_reset_cons) in Abhängigkeit von der Geschwindigkeit des Fahrzeugs zum Zeitpunkt der Berechnung (V_reset) und einem Geschwindigkeitsschwellenwert (V_reset_Min) berechnet wird.

6. Vorrichtung (30) nach Anspruch 5, wobei das Modul (42) zur Berechnung dafür ausgelegt ist, ein Rücksetzsignal an das Modul (26) zur Berechnung eines Geschwindigkeitssollwertes des Fahrzeugs (V_cons) zu senden, um die Rücksetzung des Geschwindigkeitssollwertes auf die so bestimmte Geschwindigkeit (V_reset_cons) zu aktivieren.

7. Einparkhilfesystem eines Kraftfahrzeugs, welches das Einparken des Fahrzeugs von einer Fahrbahn aus in eine Parklücke und das Ausparken aus der Parklücke zur Fahrbahn ermöglicht, wobei das Kraftfahrzeug ein System zur Erkennung von Hindernissen, ein System zur Erkennung von Parklücken, eine elektrische Servolenkung mit steuerbarem Einschlagwinkel, einen Motor und ein Bremssystem mit steuerbarem Drehmoment, ein Automatikgetriebe oder ein sogenanntes Shift-by-Wire-System, wenigstens einen odometrischen Sensor, einen Beschleunigungssensor und ein Mittel zur Aktivierung einer automatischen Steuerungsfunktion umfasst, wobei das Einparkhilfesystem umfasst:

   - ein Modul (12) zur Erkennung der Aktivierung einer Phase der Suche nach einer Parklücke, das geeignet ist zu überprüfen, ob der Fahrer ein Steuerungsorgan (14) betätigt hat, um die Funktion der Parklückensuche zu aktivieren,
   - ein Modul (16) zur Überprüfung der Bedingungen für das Starten des Einparkmanövers,
   - ein Modul (20) zur Überprüfung des Niedertretens des Gaspedals (P) und ein Modul (22) zur Durchführung des Einparkmanövers, welches das Fahrzeug in Bewegung setzt und die Geschwindigkeit über ein Modul (24) zur Geschwindigkeitsregelung regelt, und
   - eine Vorrichtung (30) zur Erkennung und Minderung von Geschwindigkeitsabweichungen eines Kraftfahrzeugs nach einem der Ansprüche 1 bis 6.

8. Einparkhilfesystem (10) nach Anspruch 7, wobei die Vorrichtung (30) zur Erkennung und Minderung von Geschwindigkeitsabweichungen ein Modul (32) zur Überprüfung des Zustands des Moduls (24) zur Geschwindigkeitsregelung umfasst, welches ermöglicht, sich zu vergewissern, dass sich das Fahrzeug im halbautomatischen oder automatischen Modus bewegt.

9. Verfahren (50) zur Erkennung und Minderung von Geschwindigkeitsabweichungen eines Kraftfahrzeugs, wobei:

   ein Geschwindigkeitsfehler ($\Delta V(k)$) zu einem Zeitpunkt (k) in Abhängigkeit von einem Geschwindigkeitssollwert (V_cons(k-1)) zu einem vorhergehenden Zeitpunkt (k-1) und einem gemessenen oder geschätzten Wert der Geschwindigkeit des Fahrzeugs (V(k)) berechnet wird,
   der Geschwindigkeitsfehler ($\Delta V(k)$) mit einem Schwellenwert (S) verglichen wird,
   ein lokaler Minimumpunkt der Kurve der Geschwindigkeit des Fahrzeugs berechnet wird, wenn der Geschwindigkeitsfehler ($\Delta V(k)$) größer als der Schwellenwert (S) ist,
   der lokale Minimumpunkt erkannt wird und
   ein Fortsetzungsgeschwindigkeits-Sollwert (V_reset_cons) berechnet wird, wenn der lokale Minimumpunkt erkannt ist.

10. Verfahren nach Anspruch 9, wobei bei der Berechnung eines lokalen Minimumpunktes die gefilterte Ableitung der Geschwindigkeit des Fahrzeugs (P(k)) zum Zeitpunkt (k) und an einer um N Probenahmeperioden verzögerten Probe berechnet wird, wobei der lokale Minimumpunkt erkannt wird, falls das Vorzeichen der gefilterten Ableitung (P(k)) zum Zeitpunkt (k) positiv ist und falls das Vorzeichen der gefilterten Ableitung (P(k-N)) für die um N Perioden verzögerte Probe negativ ist.

11. Verfahren nach Anspruch 9 oder 10, wobei der Fortsetzungsgeschwindigkeits-Sollwert (V_reset_cons) in Abhängigkeit von der Geschwindigkeit des Fahrzeugs zum Zeitpunkt der Berechnung (V_reset) und einem Geschwindigkeitsschwellenwert (V_reset_Min) berechnet wird.

12. Verfahren nach Anspruch 11, wobei ein Rücksetzsignal an das Modul (26) zur Berechnung eines Geschwindigkeitssollwertes des Fahrzeugs (V_cons) gesendet wird, um die Rücksetzung des Geschwindigkeitssollwertes auf die so bestimmte Geschwindigkeit (V_reset_cons) zu aktivieren.

**Claims**

1. Device (30) for detecting and attenuating deviations in the velocity of a motor vehicle, comprising:

    a module (34) for computing a velocity error ($\Delta$V(k)) at a time (k) depending on a velocity setpoint value (V_cons(k-1)) at a proceeding time (k-1) and on a measured or estimated value of the velocity (V(k)) of the vehicle,
    a module (36) for comparing said velocity error ($\Delta$V(k)) with a threshold value (S),
    a module (38) for computing a local minimum point of the curve of the velocity of the vehicle,
    a module (40) for detecting the local minimum, and
    a module (42) for computing a restart velocity setpoint (V_reset_cons), said module (42) being activated when the local minimum is detected.

2. Device (30) according to Claim 1, wherein the module (38) for computing a local minimum point is activated when the velocity error ($\Delta$V(k)) is higher than the threshold value (S).

3. Device (30) according to Claim 2, wherein, to compute the local minimum point, said module (38) is configured to compute the filtered derivative (P(k)) of the velocity of the vehicle at the time (k) and on a sample delayed by N sampling periods.

4. Device (30) according to Claim 3, wherein the local minimum point is detected if the sign of the filtered derivative (P(k)) at the time (k) is positive and if the sign of the filtered derivative (P(k-N)) for the sample delayed by N periods is negative.

5. Device (30) according to any one of the preceding claims, wherein the restart velocity setpoint (V_reset_cons) is computed depending on the velocity (V_reset) of the vehicle at the time of the computation and a velocity threshold (V_reset_Min).

6. Device (30) according to Claim 5, wherein the computing module (42) is configured to send, to the computing module (26), a signal for resetting a velocity setpoint value (V_cons) of the vehicle, in order to activate the reset of the velocity setpoint to the velocity (V_reset_cons) thus determined.

7. System for assisting with parking a motor vehicle, allowing the vehicle to be parked in a free parking space from a traffic lane and said parking space to be exited to the traffic lane, said motor vehicle comprising a system for detecting obstacles, a system for detecting parking spaces, electric power steering the steering angle of which is controllable, a motor or engine and a braking system the torques of which are controllable, an automatic transmission or a shift-by-wire system, at least one odometric sensor, an accelerometer, and a means for activating an automatic driving function, the system for assisting with parking comprising:

    - a module (12) for detecting the activation of a phase of searching for a parking space, able to verify that the driver has pressed on a command member (14) to activate the parking-space-search function,
    - a module (16) for verifying conditions for starting the parking manoeuvre,
    - a module (20) for verifying the depression of the accelerator pedal (P) and module (22) for carrying out the parking manoeuvre which causes the vehicle to move and regulates the velocity via a velocity-regulating module (24), and
- a device (30) for detecting and attenuating deviations in the velocity of a motor vehicle according to any one of Claims 1 to 6.

8. System (10) for assisting with parking according to Claim 7, wherein the device (30) for detecting and attenuating deviations in velocity comprises a module (32) for verifying the state of the velocity-regulating module (24), making possible to ensure that the vehicle is indeed in semi-automatic or automatic movement.

9. Method (50) for detecting and attenuating deviations in the velocity of a motor vehicle, wherein:

a velocity error ($\Delta V(k)$) is computed at a time (k) depending on a velocity setpoint value (V_cons(k-1)) at a proceeding time (k-1) and on a measured or estimated value of the velocity (V(k)) of the vehicle, said velocity error ($\Delta V(k)$) is compared with a threshold value (S), a local minimum point of the curve of the velocity of the vehicle is computed when said velocity error ($\Delta V(k)$) is higher than the threshold value (S), the local minimum point is detected, and a restart velocity setpoint (V_reset_cons) is computed when the local minimum point is detected.

10. Method according to Claim 9, wherein, during the computation of a local minimum point, the filtered derivative (P(k)) of the velocity of the vehicle is computed at the time (k) and on a sample delayed by N sampling periods, the local minimum point being detected if the sign of the filtered derivative (P(k)) at the time (k) is positive and if the sign of the filtered derivative (P(k-N)) for the sample delayed by N periods is negative.

11. Method according to Claim 9 or 10, wherein the restart velocity setpoint (V_reset_cons) is computed depending on the velocity (V_reset) of the vehicle at the time of the computation and a velocity threshold (V_reset_Min).

12. Method according to Claim 11, wherein a signal for resetting a velocity setpoint value (V_cons) of the vehicle is sent to the computing module (26), in order to activate the reset of the velocity setpoint to the velocity (V_reset_cons) thus determined.

[Fig. 1]

[Fig. 2]

[Fig. 3]

[Fig. 4]

[Fig. 5]

[Fig. 6]

[Fig. 7]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2014167255 A1
- WO 2014191209 A1
- FR 3063701 A1
- CN 207274660